# EUROPEAN PATENT SPECIFICATION

(11) **EP 2 317 724 B1**
(45) Date of publication and mention of the grant of the patent: **04.03.2015**
(21) Application number: 10188844.4
(22) Date of filing: 26.10.2010
(51) Int. Cl.: H04N 21/8355, H04L 29/06, H04N 7/173

(54) **Method and system for enabling transmission of a protected document from an electronic device to a host device**
Verfahren und System zur Bereitstellung der Übertragung eines geschützten Dokuments von einer elektronischen Vorrichtung an eine Host-Vorrichtung
Procédé et système pour activer la transmission d'un document protégé à partir d'un dispositif électronique sur un dispositif hôte

(30) Priority: 30.10.2009 IN CH26472009; 18.05.2010 KR 20100046608
(43) Date of publication of application: 04.05.2011
(73) Proprietor: Samsung Electronics Co., Ltd., Suwon-si, Gyeonggi-do, 443-742 (KR)
(72) Inventor: Yadav, Ajeet Kumar, New Delhin (IN); Yadav, Anil Kumar, 222136, Uttar Pradesh (IN); Manoharan, Balaji, 625001, Tamil Nadu (IN); Alam, Tanweer, 825301, Jharkhand (IN)
(74) Representative: Robinson, Ian Michael

(56) References cited:
- EP-A1- 1 855 223
- US-A1- 2007 039 055
- US-A1- 2008 189 213

## Description

### BACKGROUND

### Field

Apparatuses and methods consistent with the exemplary embodiments relate to communication, and more particularly to a method, apparatus and system for enabling transmission of a protected document from an electronic device having a license to the protected document to a host device without a license.

### Description of the Related Art

It is often desirable to view a document on a large display screen. Viewing a document on a large display screen may require attaching a device storing the document to a host device, including a large display screen, and transferring the document to the large display screen to view the document.

However, a digital rights management (DRM) protected document with a device specific protection scheme cannot be transferred from the device storing the document to any other host device for viewing if a license is purchased for the storage device only. As a result, a user cannot view the DRM protected document on the large display screen which is devoid of the license.

Known techniques for exporting a DRM protected document from a storage device to a large display screen may also compromise on picture quality as resolution of the large display screen is limited by the capabilities of the large display screen. Moreover complete control over the viewing of the DRM protected document, for example, viewing metadata info, zooming out, and zooming in, may not be possible owing to one or more restrictions imposed by the device specific protection scheme of the DRM protected document. Thus, more convenient techniques are desirable.

US2007/039055 is an example of remotely accessing a protected file via streaming and the claims have been characterised based on this document.

### SUMMARY

According to the present invention there is provided an apparatus and method as set forth in the appended claims. Other features of the invention will be apparent from the dependent claims, and the description which follows.

Exemplary embodiments address at least the above problems and/or disadvantages and other disadvantages not described above. Also, exemplary embodiments are not required to overcome the disadvantages described above, and an exemplary embodiment may not overcome any of the problems described above.

An exemplary embodiment of the present invention may provide a method for enabling transmission of a protected document from an electronic device to a host device, the method including: establishing a connection between the electronic device and the host device using a document viewer protocol; receiving a request by the electronic device for performing at least one operation on the protected document, wherein protection of the protected document is specific to the electronic device; decoding the protected document by the electronic device on receiving the request; arranging the decoded protected document in accordance with the received request and the document viewer protocol; and transmitting the arranged protected document to the host device via a transport medium using the document viewer protocol.

The document viewer protocol may enable performing the at least one operation on the protected document.

The at least one operation may include at least one of: viewing the protected document, controlling at least one attribute of the protected document, changing the at least one attribute of the protected document via the established connection, navigating within the protected document, and navigating within a plurality of sub-sections within the protected document.

The protected document may include at least one of a text document, an audio document and a video document.

The protected document may be streamed to the host device from the electronic device.

The establishing of the connection may include: receiving host capability information from the host device by the electronic device; providing device capability information of the electronic device to the host device; identifying a capability of the host device by the electronic device based on the received host capability information; and authenticating the host device based on the identifying of the capability of the host device by the electronic device.

The document viewer protocol may enable the host device to query information associated with at least one attribute of the protected document.

The at least one attribute of the protected document may include at least one of a visual attribute and an audible attribute.

The transmitting the arranged protected document to the host device may include: transmitting the arranged protected document in a raw format from the electronic device to the host device.

Another exemplary embodiment of the present invention provides a system for enabling transmission of a protected document from an electronic device to a host device, wherein the system may include: an electronic device enabled with a document viewer protocol to communicate with the host device via a transport medium, wherein the document viewer protocol enables performing at least one operation on the protected document by the host device; and a host device capable of communicating with the electronic device using the document viewer protocol.

The at least one operation may include at least one of: viewing the protected document, controlling at least one attribute of the protected document, changing the at least one attribute of the protected document via the established connection, navigating within the protected document and navigating within a plurality of sub-sections within the protected document.

Another exemplary embodiment of the present invention provides a display device which may include: a display unit; a communication unit which communicates with an external electronic device having a license to a protected document; and a controller which controls the communication unit to transmit a control signal for requesting fulfillment of at least one operation with regard to the protected document, and receive a decoded version of the protected document from the external electronic device in response to control signal, and controls the display unit to display the decoded version of the protected document.

The controller may further control the communication unit to transmit performance information of the display device to the external electronic device, and to receive performance information of the external electronic device from the external electronic device in response to the transmission of the performance information.

The control signal for requesting fulfillment of the at least one operation may include requesting fulfillment of at least one of viewing the protected document, controlling at least one attribute of the protected document, changing the at least one attribute of the protected document via an established connection, navigating within the protected document and navigating within a plurality of sub-sections within the protected document.

The protected document may include at least one of a text document, an audio document and a video document.

The decoded version of the protected document may include the protected document which is decoded to a raw format.

Another aspect of the present invention provides an electronic device which may include: a storage unit which stores a protected document and a license to the protected document; a communication unit which communicates with a display device; a decoder which decodes the protected document; and a controller which controls the decoder to decode the protected document in response to a control signal for requesting fulfillment of at least one operation with respect to the protected document if the control signal from the display device is received, and controls the communication unit to transmit the decoded protected document to the display device.

The controller may further control the communication unit to transmit second performance information of the electronic device to the display device if first performance information from the display device has been received, and further controls the decoder to decode the protected document on the basis of the received performance information.

The controller may further control the decoder to decode the protected document to a raw format displayable by the display device in response to the control signal.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a block diagram of a system for enabling transmission of a protected document from an electronic device to a host device;
FIG. 2 is a flow diagram illustrating operation sequence for browsing a protected document in an electronic device from a host device;
FIG. 3 is a flow diagram illustrating operation sequence for selecting a protected document in an electronic device to view and control the protected document from a host device;
FIG. 4 is a flow chart illustrating a method for enabling transmission of a protected document from an electronic device to a host device; and
FIG. 5 is a control block diagram of an electronic device and a display device serving as a host device.

### DETAILED DESCRIPTION OF EXEMPLARY EMBODIMENTS

It should be observed that method steps and system components have been represented by conventional symbols in the figures, showing only specific details that are relevant for an understanding of the present disclosure. Further, details that may be readily apparent to person ordinarily skilled in the art may not have been disclosed. In the present disclosure, relational terms such as primary and secondary, first and second, and the like, may be used to distinguish one entity from another entity, without necessarily implying any actual relationship or order between such entities.

Embodiments of the present disclosure described herein provide a method and a system for enabling transmission of a protected document from an electronic device to a host device.

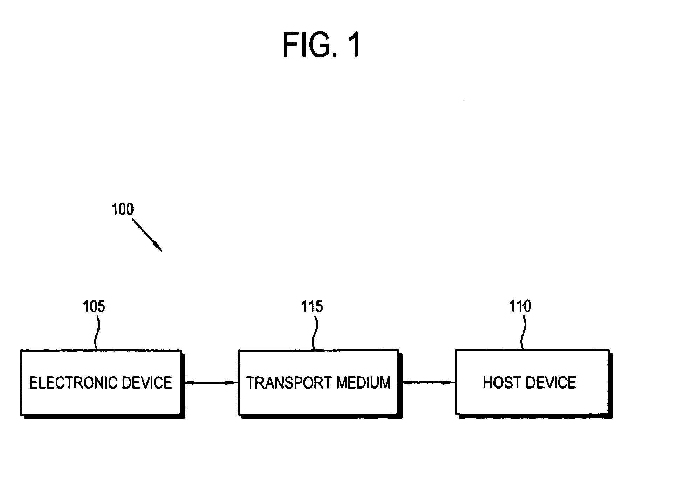

FIG. 1 exemplarily illustrates a system 100 for enabling transmission of a protected document from an electronic device 105 to a host device 110 and remotely controlling the protected document by the host device 110. The protection includes, but is not limited to one or more access control techniques. The access control techniques include, but are not limited to attribute based access control, discretionary access control, mandatory access control, and role based access control. The access control techniques include, for example, a digital rights management (DRM) protection scheme. The protection is specific to the electronic device. The host device may not be equipped with a license or a key to view or control the protected document. The protected document can be one of a text document, an audio document, a video document, and a combination thereof. The system 100 includes the electronic device 105 enabled with a document viewer protocol to communicate with the host device 110 also enabled with the document viewer protocol. The host device 110 communicates with the electronic device 105 via a transport medium 115 using the document viewer protocol. Examples of the transport medium 115 include, but are not limited to, a local area network, a wide area network, a wired network, a metropolitan area network, a universal serial bus (USB), Bluetooth, Zigbee, a mobile communication network, and a wireless network. Examples of the electronic device 105 include, but are not limited to a portable media player, an electronic book, a mobile communication device, a personal digital assistant, a digital photo frame, a camcorder, and a computing device. The protection of the protected electronic document is specific to the electronic device 105. The system 100 also includes the host device 110 capable of communicating with the electronic device 105 using the document viewer protocol. Examples of the host device 110 include, but are not limited to a digital television, a home theatre system, a digital video disk player, a desktop, and a laptop.

In order to view or control the protected document on the electronic device 105 from the host device 110, the host device 110 establishes a connection with the electronic device 105. During establishing connection, the host device 110 sends a host capability information to the electronic device 105 using the document viewer protocol. The electronic device 105, on receiving the host capability information, sends device capability using the document viewer protocol. Examples of the host capability information and the device capability information include but are not limited to, a version of the document viewer protocol, a device resolution, a version of a firmware, a model name, owner information, a menu language, a display information for document format and any information related to a configuration of the host device or the electronic device.

The document viewer protocol enables a user using the host device 110 to perform one or more operations. The operations include but are not limited to, viewing the protected document, controlling one or more attributes of the protected document, changing the one or more attributes of the protected document via the established connection, navigating within the protected document, and navigating within multiple sub-sections within the protected document. The one or more attributes includes at least one of a visual attribute and an audible attribute. Examples of the visual attributes include, but are not limited to, size of a display of the protected document, resolution of the display, format of the display, and picture clarity. Examples of the audible attributes include, but are not limited to, volume, tempo of a multimedia object within the portable document, attenuation, sound distortion, and audio equalization. The host device 110 identifies capabilities of the electronic device 105 and authenticates the electronic device 105 based on the identification. In some embodiments, one or more authentication commands are hard wired along with the connection of the host device 110 with the electronic device.105. For example, the moment the user connects the electronic device 105 to the host device 110, a series of authentication commands are sent to the electronic device 105 from the host device 110. After the successful completion of the authentication commands a first page of the protected document is decoded at the electronic device 105 and transmitted to the host device 110.

After successful authentication, the host device 110 transmits one or more commands to the electronic device 105 via the document viewer protocol. Examples of the commands include, but are not limited to, page up, page down, next, previous, page number, and search keyword. The electronic device 105 responds to the commands by performing the operations associated with the commands. After the authentication, the document viewer protocol operates in a document operation phase.

The document operation phase includes a document navigation mode and a document view mode. During the document navigation mode, a user of the host device 110 requests for a protected document information within the host device 110. The electronic device 105 obtains the requested protected document information from a file system within the electronic device 105. The electronic device 105 prepares a list of child items requested via the request for the protected document information. The electronic device 105 transmits the list to the host device 110 and the host device 110 displays the list to the user of the host device 110. The document viewer protocol enables the user of the host device 110 to navigate the list and one or more subsections within the list. Whenever the user of the host device 110 selects a protected document to view from the list from the document navigation mode, the host device 110 causes the electronic device 105 to transit to the document view mode. The electronic device 105 opens the protected document with a corresponding application.

The electronic device 105 decodes the protected document into a raw format and transmits the protected document in the raw format to the host device 110. During the document view mode, the host device 110 is allowed to query information associated with the attributes of the protected document and also control the protected document. In some embodiments, the host device 110 queries metadata information associated with the protected document. The metadata information includes, for example, author, title, subject, one or more keywords, category, and comments associated with the protected document. The electronic device 105 prepares the queried metadata information and transmits the queried metadata information to the host device 110.

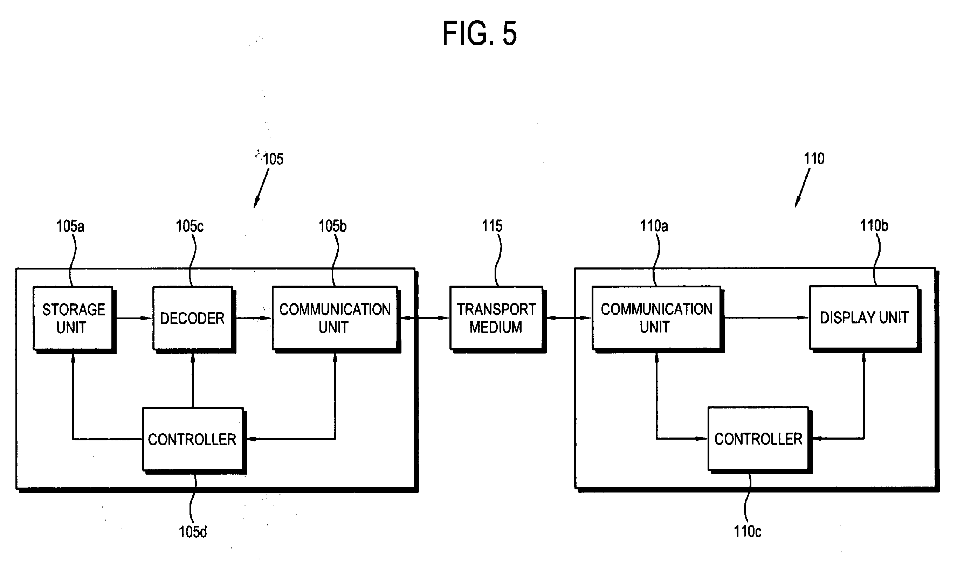

FIG. 5 shows a control block diagram of an external electronic device having a protected document and a display device serving as a host device according to an exemplary embodiment.

As shown therein, the display device serving as the host device includes a display unit 110a, a communication unit 110b and a controller 110c controlling them.

The display device may include a television such as a digital television (DTV), an internet protocol television (IPTV) or the like, a personal computer (PC), a mobile PC, etc. For example, the display device may be achieved by the TV. The external electronic device stores a protected document and a license to the protected document. On the other hand, the display device has no license to the protected document.

The display unit 110a can display an image, a video, and a protected document. The display unit 110a includes a liquid crystal display (LCD) panel having a liquid crystal layer, an organic light emitting panel having an organic light emitting layer, a plasma display panel (PDP), etc.

The communication unit 110b communicates with the external electronic device through the transport medium described with reference to FIG. 1. Thus, the communication unit 110b includes a communication protocol corresponding to the transport medium.

The controller 110c controls the communication unit 110b to transmit a control signal for requesting fulfillment of at least one operation with regard to the protected document, and to receive the protected document decoded to be displayed on the display unit 110a in response to the control signal from the external electronic device, thereby displaying the protected document on the display unit 110a.

The controller 110c controls the communication unit 110b to transmit performance information of the display device to the external electronic device and receive the performance information of the external electronic device from the external electronic device in response to the foregoing transmission. Thus, as described with reference to FIG. 1, a procedure of connecting the display device and the electronic device is established.

When the connection between the display device and the electronic device is established, the controller 110c controls the communication unit 110b to send the external electronic device the control signal for requesting the fulfillment of at least one operation with regard to the protected document.

Here, the control signal for requesting the fulfillment of at least one operation means a control signal for requesting fulfillment of at least one among viewing the protected document, controlling at least one attribute of the protected document, changing at least one attribute of the protected document, navigating within the protected document, and navigating within a plurality of sub-sections within the protected document. Detailed descriptions of these operations are the same as described with FIG. 1, and thus repetitive descriptions thereof will be avoided.

Also, the protected document includes one of a text document, an audio document, a video document and combination thereof.

Further, the decoded protected document means a protected document decoded to a raw format.

The external electronic device 105 includes a storage unit 105a, a communication unit 105b, a decoder 105c, and a controller 105d controlling them.

Here, the external electronic device may be achieved by a portable multimedia player (PMP) or an e-book reader.

The storage unit 105a stores a protected document and a license to the protected document. That the license to the protected document is stored in the storage unit 105a means that the electronic device 105 is authorized to read the protected document.

The communication unit 105b communicates with the display device through the transport medium described with FIG. 1. Accordingly, the communication unit 105b has a communication protocol corresponding to the transport medium.

The decoder 105c decodes the protected document.

When receiving a control signal for requesting fulfillment of at least one operation with regard to the protected document from the display device, the controller 105d controls the decoder 105c to decode the protected document in response to the control signal, and the communication unit 105b to transmit the decoded protected document to the display device.

When receiving performance information from the display device, the controller 105d controls the communication unit 105b to transmit the performance information of the electronic device to the display device and controls the decoder to decode the protected document on the basis of the received performance information.

Further, the controller 105d controls the decoder 105c to decode the protected document into a raw format displayable by the display device in response to the control signal.

The display device and the electronic device have a document viewer protocol described with reference to FIG. 1. The document viewer protocol has been described with reference to FIG. 1, and thus repetitive descriptions thereof will be avoided.

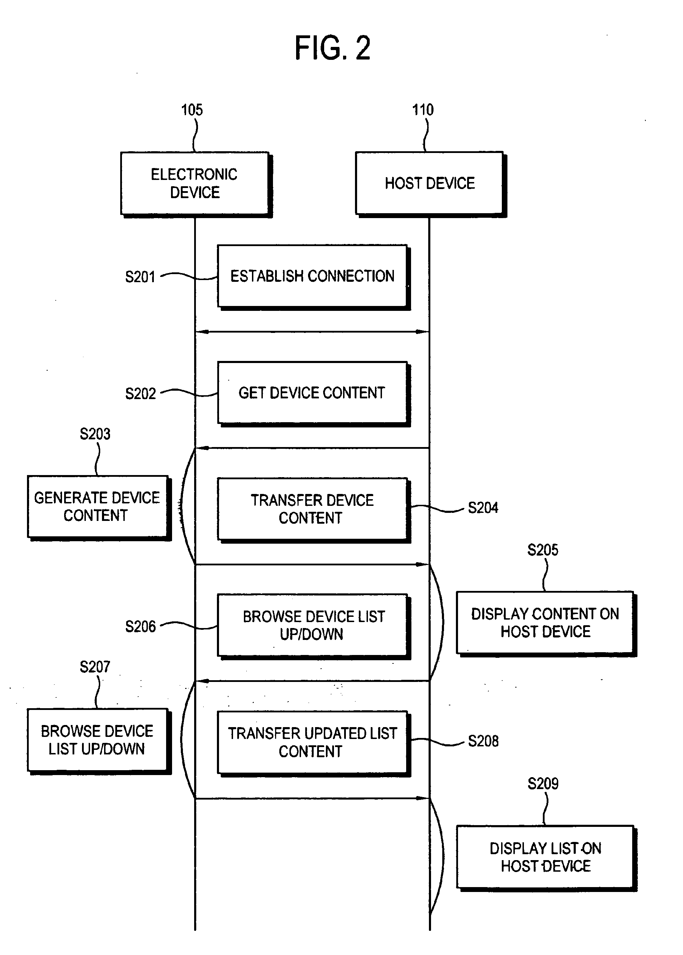

FIG. 2 is a flow diagram illustrating operation sequence for browsing a protected document of an electronic device 105 from a host device 110. In order to browse the protected document, the host device 110 establishes a connection (S201) with the electronic device 105 as explained in the detailed description of FIG. 1. The host device 110 transmits a command to the electronic device 105 using a document viewer protocol to get a device content (S202) including a list of one or more protected documents within the electronic device 105. Examples of the commands include, but are not limited to, page up, page down, next, previous, page number, and search keyword. On receiving the command, the electronic device 105 generates the device content (S203). The electronic device 105 transfers the device content (S204) to the host device 110 using the document viewer protocol. The host device 110 displays the content (S205) to a user using the host device 110. If the user wishes to browse the displayed content up or down, the host device 110 transmits a command to browse a device list up or down (S206). The electronic device 105 responds to the command by browsing the device list up or down (S207). The electronic device 105 updates the device list and transfers updated list content (S208) to the host device 110. The host device 110 displays the updated list content to the user (S209).

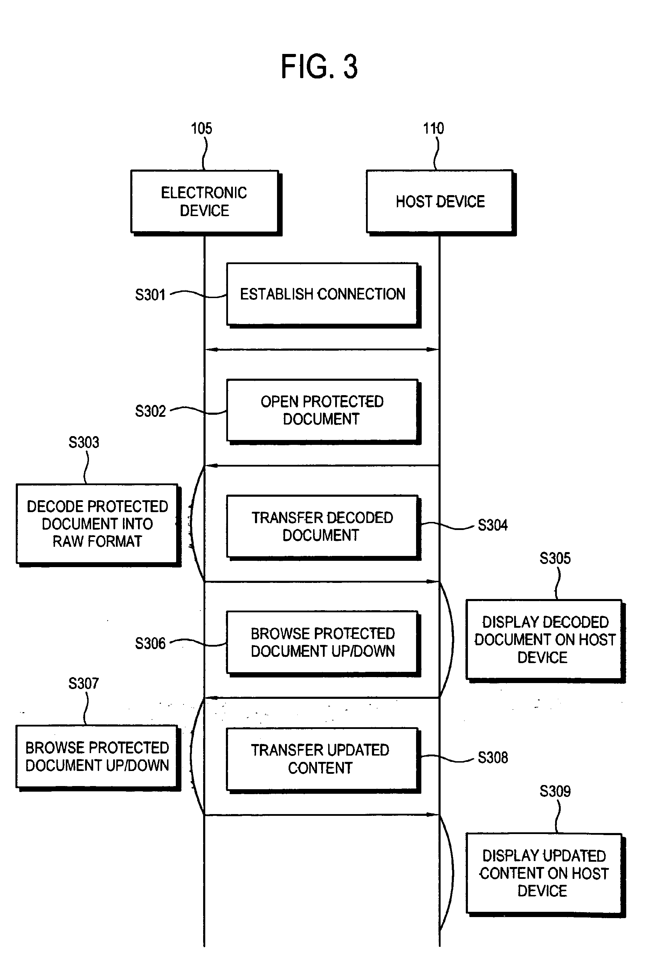

FIG. 3 is a flow diagram illustrating operation sequence for selecting a protected document on an electronic device 105 to view and control the protected document from a host device 110. A user of the host device 110 establishes a connection (S301) between the host device 110 and the electronic device 105 on intending to select the protected document on the electronic device 105. The user selects the protected document and the host device 110 transmits a command using a document viewer protocol to the electronic device 105 to open the protected document (S302). Examples of the commands include, but are not limited to, page up, page down, next, previous, page number, and search keyword. The electronic device 105 responds to the command by decoding the protected document into a raw format (S303). The electronic device 105 transfers the decoded document to the host device 110 (S304). The host device 110 displays the decoded document to the user (S305). If the user browses the protected document up or down, the host device 110 transmits a command to browse the protected document (S306) up or down to the electronic device 105 using the document viewer protocol. The electronic device 105 responds to the command by browsing the protected document up or down (S307) and updates a content of the protected document based on a state of the browsing. The electronic device 105 transfers the updated content to the host device 110 (S308). On receiving the updated content, the host device 110 displays the updated content to the user (S309).

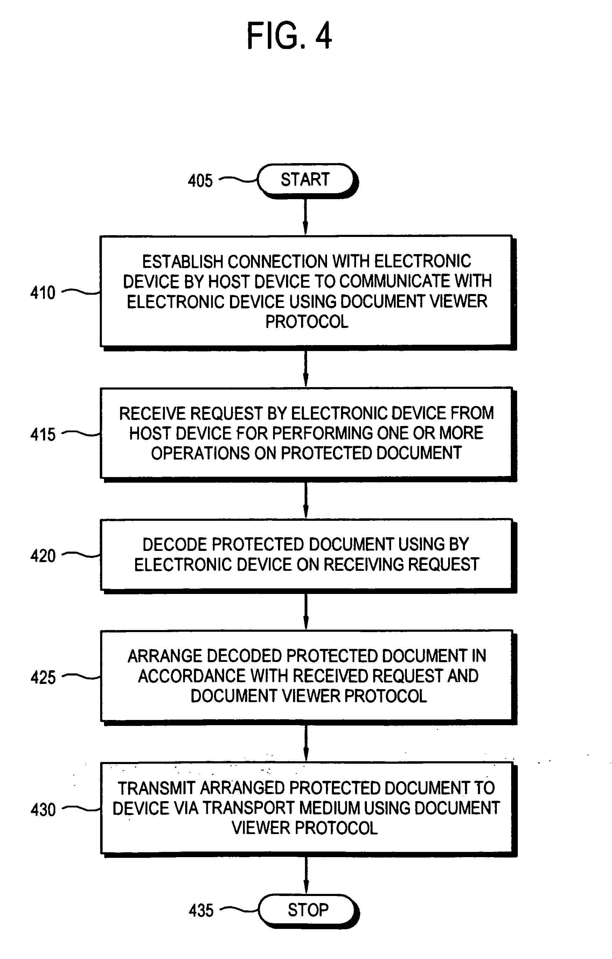

FIG. 4 is a flow chart illustrating a method for enabling transmission of a protected document from an electronic device to a host device. The protection includes, but is not limited to one or more access control techniques. The access control techniques include, but are not limited to attribute based access control, discretionary access control, mandatory access control, and role based access control. The access control techniques include, for example, a digital rights management (DRM) protection scheme. The protection is specific to the electronic device. The protected document can be one of a text document, an audio document, a video document, and a combination thereof.

The method starts at step 405.

At step 410, a connection is established by the host device with the electronic device. The connection is established by the host device to communicate with the electronic device using a document viewer protocol. During establishing the connection the electronic device receives host capability information from the host device. The electronic device responds to the received host capability information by providing device capability information of the electronic device. Examples of the host capability information and the device capability information include but are not limited to, a version of the document viewer protocol, a device resolution, a version of a firmware, a model name, owner information, a display information for document format, a menu language and any information related to a configuration of the host device or the electronic device. In some embodiments, the electronic device identifies capability of the host device based on the received host capability information. The electronic device authenticates the host device based on the identification. In some embodiments, the electronic device is automatically authenticated to the host device on establishing the connection.

At step 415, a request is received by the electronic device from the host device to perform one or more operations on the protected document. The operations include but are not limited to, viewing the protected document, controlling one or more attributes of the protected document, and changing the one or more attributes of the protected document via the established connection, navigating within the protected document, and navigating within multiple sub-sections within the protected document. Examples of changing the attributes include but are not limited to, scrolling, zooming in, zooming out, rotating a display of the protected document, increasing volume, and adding additional sound effects. The request is transmitted to the electronic device in the form of a command using the document viewer protocol. Examples of the commands include, but are not limited to, page up, page down, next, previous, page number, and search keyword. In some embodiments, the document viewer protocol enables the host device to query information associated with the attributes of the protected document. The information includes, but is not limited to, author, title, subject, keyword, category, comments associated with the protected document. The document viewer protocol enables the host device to query the information without the knowledge of a device file system of the electronic device and a document format of the electronic document.

At step 420, the protected document is decoded into a raw format by the electronic device on receiving the request from the host device.

At step 425, the decoded protected document is arranged in accordance with the received request and the document viewer protocol.

At step 430, the arranged protected document is transmitted to the host device via a transport medium using the document viewer protocol. The arranged document is transmitted in the raw format. Examples of the transport medium include but are not limited to, a local area network, a wide area network, a wired network, a metropolitan area network, a universal serial bus (USB), Bluetooth, Zigbee, a mobile communication network, and a wireless network. In some embodiments, the arranged document is streamed to the host device via the transport medium.

In the preceding specification, exemplary embodiments of the present invention have been described. However, it will be apparent to a person of ordinary skill in the art that various modifications and changes can be made, without departing from the scope of the present invention, as set forth in the claims below. Accordingly, the specification and figures are to be regarded as illustrative examples of the present disclosure, rather than in restrictive sense. All such possible modifications are intended to be included within the scope of present disclosure.

## Claims

1. A method for enabling transmission of a protected document from an electronic device (105) to a host device (110), the method comprising:
establishing a connection between the electronic device (105) and the host device (110);
receiving a request by the electronic device (105) for performing at least one operation on the protected document, wherein protection of the protected document is specific to the electronic device (105);
**characterised by**:
establishing the connection between the electronic device (105) and the host device (110) using a document viewer protocol in an authentication phase which includes the steps of:
receiving host capability information from the host device (110) by the electronic device (105);
providing device capability information of the electronic device (105) to the host device (110);
identifying a capability of the host device (110) by the electronic device (105) based on the received host capability information; and
authenticating the host device (110) based on the identifying of the capability of the host device (110) by the electronic device (105);
the method further comprising:
decoding the protected document, by the electronic device (105), in accordance with the received request;
arranging the decoded protected document in accordance with the received request and the document viewer protocol; and
transmitting the arranged decoded protected document to the host device via a transport medium (115) using the document viewer protocol;
wherein the host capability information and the device capability information include at least one among a version of the document view protocol, a device resolution, a version of a firmware, a model name, owner information, a menu language, a display information for document format and an information related to a configuration of the host device (110) or the electronic device (105).

2. The method of claim 1, wherein the document viewer protocol enables performing the at least one operation on the protected document,
wherein the at least one operation comprises at least one of: viewing the protected document, controlling at least one attribute of the protected document, changing the at least one attribute of the protected document via the established connection, navigating within the protected document, and navigating within a plurality of sub-sections within the protected document.

3. The method of claim 1, wherein the protected document comprises at least one of a text document, an audio document and a video document.

4. The method of claim 1, wherein the document viewer protocol enables the host device (110) to query information associated with at least one attribute of the protected document.

5. The method of claim 2, wherein the at least one attribute of the protected document comprises at least one of a visual attribute and an audible attribute.

6. The method of claim 1, wherein the transmitting the arranged protected document to the host device (110) comprises:
transmitting the arranged protected document in a raw format from the electronic device (105) to the host device (110).

7. A display device (110) which is a host device, the display device (110) comprising
a display unit (110b);
a communication unit (110a) arranged to communicate with an external electronic device (105) that has a license to a protected document; and
a controller (110c);
**characterised in that**:
the controller (110c) is arranged to control the communication unit (110a) to establish a connection between the display device (110) and the electronic device (105) via the communication unit (110a) using a document viewer protocol in an authentication phase which includes transmitting host capability information from the display device (110) to the electronic device (105) to authenticate the display device (110) based on the identifying of the capability of the display device (110) by the electronic device (105), and receiving device capability information of the electronic device (105);
the controller (110c) is arranged to control the communication unit (110a) to transmit a control signal for requesting fulfillment of at least one operation with regard to the protected document, and receive a decoded version of the protected document from the external electronic device (105) in response to the control signal, and to control the display unit (110b) to display the decoded version of the protected document;
wherein the host capability information and the device capability information include at least one among a version of the document view protocol, a device resolution, a version of a firmware, a model name, owner information, a menu language, a display information for document format and an information related to a configuration of the host device (110) or the electronic device (105).

8. The display device of claim 7, wherein the controller (110c) further controls the communication unit (110a) to transmit performance information of the display device (110) to the external electronic device (105), and to receive performance information of the external electronic device (105) from the external electronic device (105) in response to the transmission of the performance information.

9. The display device of claim 8, wherein the control signal for requesting fulfillment of the at least one operation comprises requesting fulfillment of at least one of viewing the protected document, controlling at least one attribute of the protected document, changing the at least one attribute of the protected document via an established connection, navigating within the protected document and navigating within a plurality of sub-sections within the protected document.

10. The display device of claim 7, wherein the protected document comprises at least one of a text document, an audio document and a video document.

11. The display device of claim 7, wherein the decoded version of the protected document comprises the protected document which is decoded to a raw format.

12. An electronic device (105), comprising:
a storage unit (105a) is arranged to store a protected document and a license to the protected document;
a communication unit (105b) is arranged to communicate with a display device (110) which is a host device;
a decoder (105c) is arranged to decode the protected document; and
**characterised in that**:
a controller (105d) is arranged to establish a connection between the electronic device (105) and the host device (110) via the communication unit (105b) using a document viewer protocol in an authentication phase which includes receiving host capability information from the host device (110) by the electronic device (105), providing device capability information of the electronic device (105) to the host device (110), identifying a capability of the host device (110) by the electronic device (105) based on the received host capability information, and authenticating the host device (110) based on the identifying of the capability of the host device (110) by the electronic device (105);
a controller (105d) is arranged to control the decoder (105c) to decode the protected document in response to a control signal for requesting fulfillment of at least one operation with respect to the protected document if the control signal from the display device (110) is received, and to control the communication unit (105b) to transmit the decoded protected document to the display device (110);
wherein the host capability information and the device capability information include at least one among a version of the document view protocol, a device resolution, a version of a firmware, a model name, owner information, a menu language, a display information for document format and an information related to a configuration of the host device (110) or the electronic device (105).

13. The electronic device of claim 12, wherein the controller (105d) is further arranged to control the communication unit (105b) to transmit second performance information of the electronic device (105) to the display device (110) if first performance information from the display device (110) has been received, and further is arranged to control the decoder (105c) to decode the protected document on the basis of the received performance information.

14. The electronic device of claim 12, wherein the controller (105d) is further arranged to control the decoder (105c) to decode the protected document to a raw format displayable by the display device (110) in response to the control signal.

## Patentansprüche

1. Verfahren zum Ermöglichen einer Übertragung eines geschützten Dokuments von einer elektronischen Einrichtung (105) zu einer Hosteinrichtung (110), wobei das Verfahren Folgendes umfasst:
Herstellen einer Verbindung zwischen der elektronischen Einrichtung (105) und der Hosteinrichtung (110);
Empfangen einer Anfrage durch die elektronische Einrichtung (105) wegen eines Ausführens mindestens einer Operation bei dem geschützten Dokument, wobei ein Schutz des geschützten Dokuments spezifisch für die elektronische Einrichtung (105) ist;
**gekennzeichnet durch**:
Herstellen der Verbindung zwischen der elektronischen Einrichtung (105) und der Hosteinrichtung (110) mittels eines Dokumentbetrachterprotokolls in einer Authentifizierungsphase, die die folgenden Schritte umfasst:
Empfangen von Hostfähigkeitsinformationen von der Hosteinrichtung (110) **durch** die elektronische Einrichtung (105);
Bereitstellen von Einrichtungsfähigkeitsinformationen der elektronischen Einrichtung (105) für die Hosteinrichtung (110);
Identifizieren einer Fähigkeit der Hosteinrichtung (110) **durch** die elektronische Einrichtung (105) auf der Grundlage der empfangenen Hostfähigkeitsinformationen; und
Authentifizieren der Hosteinrichtung (110) auf der Grundlage des Identifizierens der Fähigkeit der Hosteinrichtung (110) **durch** die elektronische Einrichtung (105);
wobei das Verfahren ferner Folgendes umfasst:
Decodieren des geschützten Dokuments **durch** die elektronische Einrichtung (105) in Übereinstimmung mit der empfangenen Anfrage;
Anordnen des decodierten geschützten Dokuments in Übereinstimmung mit der empfangenen Anfrage und dem Dokumentbetrachterprotokoll; und
Übertragen des angeordneten geschützten Dokuments an die Hosteinrichtung über ein Transportmedium (115) unter Verwendung des Dokumentbetrachterprotokolls;
wobei die Hostfähigkeitsinformationen und die Einrichtungsfähigkeitsinformationen mindestens ein Element der folgenden Gruppe umfassen: eine Version des Dokumentbetrachterprotokolls, eine Einrichtungsauflösung; eine Version einer Firmware, ein Modellname, Eigentümerinformationen, eine Menüsprache, eine Anzeigeinformation für ein Dokumentenformat und eine Information, die sich auf eine Konfiguration der Hosteinrichtung (110) oder der elektronischen Einrichtung (105) bezieht.

2. Verfahren nach Anspruch 1, wobei das Dokumentbetrachterprotokoll ein Ausführen der mindestens einen Operation bei dem geschützten Dokument ermöglicht,
wobei die mindestens eine Operation mindestens eine Operation aus der folgenden Gruppe umfasst: Betrachten des geschützten Dokuments, Steuern von mindestens einem Attribut des geschützten Dokuments, Ändern des mindestens einen Attributs des geschützten Dokuments über die hergestellte Verbindung, Navigieren innerhalb des geschützten Dokuments und Navigieren innerhalb mehrerer Unterabschnitte innerhalb des geschützten Dokuments.

3. Verfahren nach Anspruch 1, wobei das geschützte Dokument ein Textdokument und/oder ein Audiodokument und/oder ein Videodokument umfasst.

4. Verfahren nach Anspruch 1, wobei das Dokumentbetrachterprotokoll es der Hosteinrichtung (110) ermöglicht, Informationen, die mindestens einem Attribut des geschützten Dokuments zugeordnet sind, abzufragen.

5. Verfahren nach Anspruch 2, wobei das mindestens eine Attribut des geschützten Dokuments ein visuelles Attribut und/oder ein akustisches Attribut umfasst.

6. Verfahren nach Anspruch 1, wobei das Übertragen des angeordneten geschützten Dokuments an die Hosteinrichtung (110) Folgendes umfasst:
Übertragen des angeordneten geschützten Dokuments in einem Rohformat von der elektronischen Einrichtung (105) an die Hosteinrichtung (110).

7. Anzeigeeinrichtung (110), die eine Hosteinrichtung ist, wobei die Anzeigeeinrichtung (110) Folgendes umfasst:
eine Anzeigeeinheit (110b);
eine Kommunikationseinheit (110a), die dazu ausgelegt ist, mit einer externen elektronischen Einrichtung (105), die eine Lizenz für ein geschütztes Dokument hat, zu kommunizieren; und
einen Controller (110c);
**dadurch gekennzeichnet, dass**
der Controller (110c) dazu ausgelegt ist, die Kommunikationseinheit (110a) zu steuern, damit sie eine Verbindung zwischen der Anzeigeeinrichtung (110) und der elektronischen Einrichtung (105) über die Kommunikationseinheit (110a) mittels eines Dokumentbetrachterprotokolls in einer Authentifizierungsphase herstellt, die ein Übertragen von Hostfähigkeitsinformationen von der Anzeigeeinrichtung (110) an die elektronische Einrichtung (105), um die Anzeigeeinrichtung (110) basierend auf dem Identifizieren der Fähigkeit der Anzeigeeinrichtung (110) durch die elektronische Einrichtung (105) zu authentifizieren, und ein Empfangen von Einrichtungsfähigkeitsinformationen der elektronischen Einrichtung (105) umfasst;
der Controller (110c) dazu ausgelegt ist, die Kommunikationseinheit (110a) zu steuern, damit sie ein Steuersignal zum Anfordern der Ausführung mindestens einer Operation mit Bezug auf das geschützte Dokument überträgt und als Antwort auf das Steuersignal eine decodierte Version des geschützten Dokuments von der elektronischen Einrichtung (105) erhält, und die Anzeigeeinheit (110b) zu steuern, damit sie die decodierte Version des geschützten Dokuments anzeigt;
wobei die Hostfähigkeitsinformationen und die Einrichtungsfähigkeitsinformationen mindestens ein Element der folgenden Gruppe umfassen: eine Version des Dokumentbetrachterprotokolls, eine Einrichtungsauflösung; eine Version einer Firmware, ein Modellname, Eigentümerinformationen, eine Menüsprache, eine Anzeigeinformation für ein Dokumentenformat und eine Information, die sich auf eine Konfiguration der Hosteinrichtung (110) oder der elektronischen Einrichtung (105) bezieht.

8. Anzeigeeinrichtung nach Anspruch 7, wobei der Controller (110c) die Kommunikationseinheit (110a) ferner steuert, damit sie Leistungsinformationen der Anzeigeeinrichtung (110) an die externe elektronische Einrichtung (105) sendet und Leistungsinformationen der externen elektronischen Einrichtung (105) von der externen elektronischen Einrichtung (105) als Antwort auf die Übertragung der Leistungsinformationen empfängt.

9. Anzeigeeinrichtung nach Anspruch 8, wobei das Steuersignal zum Anfordern einer Ausführung der mindestens einen Operation das Anfordern der Ausführung mindestens einer der folgenden Operationen umfasst: Betrachten des geschützten Dokuments, Steuern von mindestens einem Attribut des geschützten Dokuments, Ändern des mindestens einen Attributs des geschützten Dokuments über die hergestellte Verbindung, Navigieren innerhalb des geschützten Dokuments und Navigieren innerhalb mehrerer Unterabschnitte innerhalb des geschützten Dokuments.

10. Anzeigeeinrichtung nach Anspruch 7, wobei das geschützte Dokument ein Textdokument und/oder ein Audiodokument und/oder ein Videodokument umfasst.

11. Anzeigeeinrichtung nach Anspruch 7, wobei die decodierte Version des geschützten Dokuments das geschützte Dokument, das zu einem Rohformat decodiert ist, umfasst.

12. Elektronische Einrichtung (105), die Folgendes umfasst:
eine Speichereinheit (105a), die dazu ausgelegt ist, ein geschütztes Dokument und eine Lizenz für das geschützte Dokument zu speichern;
eine Kommunikationseinheit (105b), die dazu ausgelegt ist, mit einer Anzeigeeinrichtung (110) zu kommunizieren;
einen Decoder (105c), der dazu ausgelegt ist, das geschützte Dokument zu decodieren; und
**dadurch gekennzeichnet, dass**
ein Controller (105d) dazu ausgelegt ist, eine Verbindung zwischen der elektronischen Einrichtung (105) und der Hosteinrichtung (110) über die Kommunikationseinheit (105b) mittels eines Dokumentbetrachterprotokolls in einer Authentifizierungsphase herzustellen, die ein Empfangen von Hostfähigkeitsinformationen von der Hosteinrichtung (110) durch die elektronische Einrichtung (105), ein Bereitstellen von Einrichtungsfähigkeitsinformationen der elektronischen Einrichtung (105) für die Hosteinrichtung (110), ein Identifizieren einer Fähigkeit der Hosteinrichtung (110) durch die elektronische Einrichtung (105) basierend auf den empfangenen Hostfähigkeitsinformationen und ein Authentifizieren der Hosteinrichtung (110) basierend auf dem Identifizieren der Fähigkeit der Hosteinrichtung (110) durch die elektronische Einrichtung (105) umfasst;
ein Controller (105d) dazu ausgelegt ist, den Decoder (105c) zu steuern, damit er das geschützte Dokument als Antwort auf ein Steuersignal wegen des Anforderns mindestens einer Operation mit Bezug auf das geschützte Dokument dann decodiert, wenn das Steuersignal von der Anzeigeeinrichtung (110) empfangen wird, und die Kommunikationseinheit (105b) steuert, damit sie das decodierte geschützte Dokument an die Anzeigeeinrichtung (110) überträgt;
wobei die Hostfähigkeitsinformationen und die Einrichtungsfähigkeitsinformationen mindestens ein Element der folgenden Gruppe umfassen: eine Version des Dokumentbetrachterprotokolls, eine Einrichtungsauflösung; eine Version einer Firmware, ein Modellname, Eigentümerinformationen, eine Menüsprache, eine Anzeigeinformation für ein Dokumentenformat und eine Information, die sich auf eine Konfiguration der Hosteinrichtung (110) oder der elektronischen Einrichtung (105) bezieht.

13. Elektronische Einrichtung nach Anspruch 12, wobei der Controller (105d) ferner dazu ausgelegt ist, die Kommunikationseinheit (105b) zu steuern, damit sie zweite Leistungsinformationen der elektronischen Einrichtung (105) an die Anzeigeeinrichtung (110) dann überträgt, wenn erste Leistungsinformationen von der Anzeigeeinrichtung (110) empfangen worden sind, und ferner dazu ausgelegt ist, den Decoder (105c) zu steuern, damit er das geschützte Dokument auf der Grundlage der empfangenen Leistungsinformationen decodiert.

14. Elektronische Einrichtung nach Anspruch 12, wobei der Controller (105d) ferner dazu ausgelegt ist, den Decoder (105c) zu steuern, damit er das geschützte Dokument zu einem Rohformat decodiert, das durch die Anzeigeeinrichtung (110) als Antwort auf das Steuersignal angezeigt werden kann.

## Revendications

1. Procédé destiné à permettre l'émission d'un document protégé d'un dispositif électronique (105) à un dispositif hôte (110), le procédé comportant les étapes consistant à :
établir une liaison entre le dispositif électronique (105) et le dispositif hôte (110) ;
recevoir une demande du dispositif électronique (105) visant à effectuer au moins une opération sur le document protégé, la protection du document protégé étant spécifique au dispositif électronique (105) ;
**caractérisé par** les étapes consistant à :
établir la liaison entre le dispositif électronique (105) et le dispositif hôte (110) en utilisant un protocole de visionneuse de documents lors d'une phase d'authentification qui comprend les étapes consistant à :
faire recevoir des informations de capacité d'hôte en provenance du dispositif hôte (110) par le dispositif électronique (105) ;
transmettre des informations de capacité de dispositif du dispositif électronique (105) au dispositif hôte (110) ;
faire identifier une capacité du dispositif hôte (110) par le dispositif électronique (105) sur la base des informations reçues de capacité d'hôte ; et
authentifier le dispositif hôte (110) sur la base de l'identification de la capacité du dispositif hôte (110) par le dispositif électronique (105) ;
le procédé comportant en outre les étapes consistant à :
décoder le document protégé, par le dispositif électronique (105), en fonction de la demande reçue ;
disposer le document protégé décodé en fonction de la demande reçue et du protocole de visionneuse de documents ; et
envoyer le document protégé décodé disposé au dispositif hôte via un support (115) de transport en utilisant le protocole de visionneuse de documents ;
les informations de capacité d'hôte et les informations de capacité de dispositif comprenant au moins une information parmi une version du protocole de visualisation de documents, une résolution du dispositif, une version d'un microprogramme, un nom de modèle, des informations sur le propriétaire, une langue des menus, une information d'affichage relative au format de document et une information liée à une configuration du dispositif hôte (110) ou du dispositif électronique (105).

2. Procédé selon la revendication 1, le protocole de visionneuse de documents permettant la réalisation de l'opération ou des opérations sur le document protégé, l'opération ou les opérations comportant au moins une des actions consistant à : visualiser le document protégé, commander au moins un attribut du document protégé, modifier l'attribut ou les attributs du document protégé via la liaison établie, naviguer à l'intérieur du document protégé, et naviguer à l'intérieur d'une pluralité de sous-sections à l'intérieur du document protégé.

3. Procédé selon la revendication 1, le document protégé comportant au moins un document parmi un document texte, un document audio et un document vidéo.

4. Procédé selon la revendication 1, le protocole de visionneuse de documents permettant au dispositif hôte (110) d'interroger des informations associées à au moins un attribut du document protégé.

5. Procédé selon la revendication 2, l'attribut ou les attributs du document protégé comportant au moins un attribut parmi un attribut visuel et un attribut audible.

6. Procédé selon la revendication 1, l'envoi du document protégé disposé au dispositif hôte (110) comportant :
envoyer le document protégé disposé dans un format brut du dispositif électronique (105) au dispositif hôte (110).

7. Dispositif (110) d'affichage constituant un dispositif hôte, le dispositif (110) d'affichage comportant
une unité (110b) d'affichage :
une unité (110a) de communications agencée pour communiquer avec un dispositif électronique externe (105) possédant une habilitation pour un document protégé ; et
une commande (110c) ;
**caractérisé en ce que** :
la commande (110c) est agencée pour commander l'unité (110a) de communications pour établir une liaison entre le dispositif (110) d'affichage et le dispositif électronique (105) via l'unité (110a) de communications en utilisant un protocole de visionneuse de documents lors d'une phase d'authentification qui comprend les étapes consistant à envoyer des informations de capacité d'hôte du dispositif (110) d'affichage au dispositif électronique (105) pour authentifier le dispositif (110) d'affichage sur la base de l'identification de la capacité du dispositif (110) d'affichage par le dispositif électronique (105), et recevoir des informations de capacité de dispositif du dispositif électronique (105) ;
la commande (110c) est agencée pour commander l'unité (110a) de communications en vue d'émettre un signal de commande pour demander l'exécution d'au moins une opération par rapport au document protégé, et recevoir une version décodée du document protégé en provenance du dispositif électronique externe (105) en réaction à le signal de commande, et pour commander l'unité (110b) d'affichage en vue d'afficher la version décodée du document protégé ;
les informations de capacité d'hôte et les informations de capacité de dispositif comprenant au moins une information parmi une version du protocole de visualisation de documents, une résolution du dispositif, une version d'un microprogramme, un nom de modèle, des informations sur le propriétaire, une langue des menus, une information d'affichage relative au format de document et une information liée à une configuration du dispositif hôte (110) ou du dispositif électronique (105).

8. Dispositif d'affichage selon la revendication 7, la commande (110c) commandant en outre l'unité (110a) de communications en vue d'envoyer des informations de performances du dispositif (110) d'affichage au dispositif électronique externe (105), et de recevoir des informations de performances du dispositif électronique externe (105) en provenance du dispositif électronique externe (105) en réaction à l'envoi des informations de performances.

9. Dispositif d'affichage selon la revendication 8, le signal de commande servant à demander l'exécution de l'opération ou des opérations comportant une demande d'exécution d'au moins une es actions consistant à visualiser le document protégé, à commander au moins un attribut du document protégé, à modifier l'attribut ou les attributs du document protégé via une liaison établie, à naviguer à l'intérieur du document protégé et à naviguer à l'intérieur d'une pluralité de sous-sections à l'intérieur du document protégé.

10. Dispositif d'affichage selon la revendication 7, le document protégé comportant au moins un document parmi un document texte, un document audio et un document vidéo.

11. Dispositif d'affichage selon la revendication 7, la version décodée du document protégé comportant le document protégé qui est décodé vers un format brut.

12. Dispositif électronique (105), comportant :
une unité (105a) de stockage qui est agencée pour conserver un document protégé et une habilitation pour le document protégé ;
une unité (105b) de communications qui est agencée pour communiquer avec un dispositif (110) d'affichage qui est un dispositif hôte ;
un décodeur (105c) qui est agencé pour décoder le document protégé ; et
**caractérisé en ce que** :
une commande (105d) est agencée pour établir une liaison entre le dispositif électronique (105) et le dispositif hôte (110) via l'unité (105b) de communications en utilisant un protocole de visionneuse de documents lors d'une phase d'authentification qui comprend les étapes consistant à recevoir des informations de capacité d'hôte du dispositif hôte (110) par le dispositif électronique (105), à transmettre des informations de capacité de dispositif du dispositif électronique (105) au dispositif hôte (110), à faire identifier une capacité du dispositif hôte (110) par le dispositif électronique (105) sur la base des informations reçues de capacité d'hôte, et authentifier le dispositif hôte (110) sur la base de l'identification de la capacité du dispositif hôte (110) par le dispositif électronique (105) ;
une commande (105d) est agencée pour commander le décodeur (105c) en vue de décoder le document protégé en réaction à un signal de commande servant à demander l'exécution d'au moins une opération par rapport au document protégé si le signal de commande du dispositif (110) d'affichage est reçu, et pour commander l'unité (105b) de communications en vue d'envoyer le document protégé décodé à dispositif (110) d'affichage ;
les informations de capacité d'hôte et les informations de capacité de dispositif comprenant au moins une information parmi une version du protocole de visualisation de documents, une résolution du dispositif, une version d'un microprogramme, un nom de modèle, des informations sur le propriétaire, une langue des menus, une information d'affichage relative au format de document et une information liée à une configuration du dispositif hôte (110) ou du dispositif électronique (105).

13. Dispositif électronique selon la revendication 12, la commande (105d) étant en outre agencée pour commander l'unité (105b) de communications en vue d'envoyer des deuxièmes informations de performances du dispositif électronique (105) au dispositif (110) d'affichage si des premières informations de performances du dispositif (110) d'affichage ont été reçues, et étant en outre agencée pour commander le décodeur (105c) en vue de décoder le document protégé sur la base des informations de performances reçues.

14. Dispositif électronique selon la revendication 12, la commande (105d) étant en outre agencée pour commander le décodeur (105c) en vue de décoder le document protégé vers un format brut susceptible d'être affiché par le dispositif (110) d'affichage en réaction au signal de commande.
